# EUROPEAN PATENT SPECIFICATION

(11) **EP 1 955 762 B1**
(45) Date of publication and mention of the grant of the patent: **02.09.2009**
(21) Application number: 07000820.6
(22) Date of filing: 16.01.2007
(51) Int. Cl.: B01J 19/00

(54) **Substance manufacturing apparatus and chemical reactors with the apparatus**
Substanzherstellungsvorrichtung und chemische Reaktoren mit der Vorrichtung
Appareil pour la fabrication d'une substance et réacteurs chimiques avec l'appareil

(43) Date of publication of application: 13.08.2008
(73) Proprietor: Hitachi Plant Technologies, Ltd., Chiyoda-ku Tokyo 101-0047 (JP)
(72) Inventor: Asano, Yukako c/o Hitachi, Ltd. IP Group 12th floor, Tokyo 100-8220 (JP); Oda, Masashi c/o Hitachi Plant Technologies Ltd, Tokyo 170-0004 (JP)
(74) Representative: Strehl Schübel-Hopf & Partner

(56) References cited:
- EP-A2- 1 031 375
- DE-B3-102005 034 642
- JP-A- 2000 180 092

## Description

### BACKGROUND OF THE INVENTION

### 1. Field of the Invention

The present invention relates to a microreactor as a substance manufacturing apparatus, and in particular, a chemical reactor comprising a microreactor capable of detecting leakage of fluid from channels.

### 2. Background of the Invention

Japanese Patent Application Laid-Open No. 6-236496 discloses an example of a conventional apparatus for detecting leakage of fluid. According to the detection apparatus disclosed in the document, for monitoring the fluid in the channel without direct contact with the fluid, a measuring pipe is provided for detecting the fluctuation of the dielectric load in the measuring pipe portion. At the time, the vibration frequency is measured using a resonance electromagnetic type sensor for determining the fluid pressure and the composition of the fluid including the air and the other gases from the measured frequency change.

Japanese Patent Application Laid-Open No. 9-43087 discloses another method for detecting leakage of fluid. According to a leak judging apparatus disclosed in the document, for judging leakage of fluid even in the presence of noises, the area is calculated from the frequency spectrum of acoustic signals received by the sensor. When the area becomes larger than the area calculated from a predetermined function, it is judged to have a leak. Furthermore, Japanese Patent Application Laid-Open No. 2004-53545 discloses installation of a microreactor in a pressure container for preventing pressure leak from the microreactor.

According to the apparatus disclosed in Japanese Patent Application Laid-Open Nos. 6-236496 and 9-43087, since application to a microreactor as a small apparatus is not taken into consideration, a problem of bulkiness of the apparatus is involved for application to a microreactor. Furthermore, since chemical reaction is generated in a minute channel in the microreactor, by not only direct contact between fluid and reactive substances an electromagnetic wave, a ultrasonic wave, an infrared ray, a ultraviolet ray, or the like, adverse effect may be posed to the reaction process, the reaction product, or the like.

Moreover, even in the case the dielectric property disclosed in the JP-A No. 6-236496 is to be utilized, since the fluid and the reactive substances in the microreactor may not always have a significant dielectric property, the case without showing the dielectric property may be conceivable. Furthermore, in the case of storing the entire microreactor in a temperature controlled bath for the temperature adjustment, even by use of the leak judging method disclosed in the JP-A No. 9-43087, it is difficult to detect the leak noise of the fluid leaked out from the microreactor due to the temperature controlled bath serving as a shield.

Although the microreactor disclosed in the JP-A No. 2004-53545 is effective indeed in the case of reaction in a high pressure, since not every reaction is generated in a high pressure, and furthermore, for providing a high pressure, every container, or the like should be a high-pressure container so that the apparatus should be bulky.

If the reaction vessel is provided in a micro shape using a microreactor, a nature different from the bulk may be shown. For example, even in the case the resistance to corrosion is achieved in the bulk, the resistance to corrosion can be lost in a microreactor. If such a material is used for a microreactor, corrosion, which may be generated inside the channel, can hardly be detected from the outside of the microreactor.

DE 10 2005 034642 B3 discloses an apparatus with which the invention has in common the features recited in the precharacterising first part of each of claims 1 and 2. The apparatus of that prior art has a microreactor having a space in the vicinity of a fluid channel, the space being coupled with a detector for detecting leakage of fluid from the fluid channel.

EP 1 031 375 A1 discloses integration of sensors into a microreactor to detect temperature, pressure and flow rate in a reaction channel. JP 2000 180092 A discloses pressure measurement in a buffer space of a heat exchanger so as to detect leakage of fluid from the cold or hot side of the heat exchanger into the buffer space.

### SUMMARY OF THE INVENTION

It is an object of the invention to provide a substance manufacturing apparatus and, more particularly, a chemical reactor with improved detection of leakage of fluid from a channel of the apparatus.

This object is solved by the substance manufacturing apparatus and chemical reactor as set forth in the independent claims. The dependent claims relate to preferred embodiments of the invention.

An embodiment of the invention can detect leakage of fluid from a microreactor by a simple configuration. Another embodiment of the present invention can detect leakage of fluid without changing the configuration of a reaction channel of a microreactor.

An aspect of the present invention for achieving the above-mentioned object is a substance manufacturing apparatus having a first substrate having a channel for mixing and allowing passage of first and second solutions, and a second substrate mounted airtightly on the first substrate, wherein a leak detecting channel for detecting leakage of the first, second solutions or a reaction product solution from the channel is formed in the vicinity of the channel formed in the first substrate.

In the aspect, it is possible that the channel is formed in a meandering form and the leak detecting channel comprises a plurality of channels with bifurcations elongating between the meandering channels, or it is possible that the channel is formed in a meandering form, and the leak detecting channel comprises two meandering channels along the meandering channel. Furthermore, it is preferable that a pressure detecting means for detecting the pressure of the leak detecting channel and a pressure regulator for judging leakage of the solution by comparing the pressure with a predetermined value are provided, and the pressure regulator maintains the leak detecting channel in a negative pressure.

In the above-mentioned aspect, it is possible that fluid is sealed in the leak detecting channel, and a detecting means for detecting at least one selected from any components of the gases of the fluid in the leak detecting channel, the spatial thermal conductivity and the electric conductivity is provided, it is also possible that a means for maintaining the leak detecting channel in a negative pressure is provided.

Another aspect of the present invention for achieving the above-mentioned object is a chemical reactor comprising a pump for sending first and second solutions, a pump control device for controlling the sending amount of the first and second solutions to be sent by the pump, and a microreactor to have supply of the first and second solutions, having a channel for mixing and reacting the first and second solutions, wherein the microreactor has a first substrate with the above-mentioned channel and a second substrate to be bonded airtightly with the first substrate, a leak detecting channel with gas sealed by a negative pressure provided in the vicinity of the channel formed in the first substrate, a pressure detecting means for detecting the pressure of the leak detecting channel, and a pressure regulator for judging leakage of the first and second solutions or a reaction product solution by comparing the pressure detected by the pressure detecting means with a predetermined value.

According to the present invention, since the leak detecting channel is provided in the vicinity of the channel including the reaction production solution, leakage of fluid from the channel can be detected certainly in the early stage in a simple configuration.

### BRIEF DESCRIPTION OF THE DRAWINGS

FIG 1 is a schematic diagram of an embodiment of a leak detecting system according to the present invention.
FIG. 2 is a top view of a microreactor used in the leak detecting system shown in FIG. 1.
FIG. 3 is an exploded perspective view of the microreactor used in the leak detecting system shown in FIG. 1.
FIG. 4 is a control flow chart of the leak detecting system shown in FIG. 1.

### DESCRIPTION OF THE PREFERRED EMBODIMENT

In the present invention, a minute channel 103 for the operating fluid in the microreactor 106, and a monitoring channel 105 along the operating fluid channel 103 for detecting the state of the operating fluid channel 103 are formed in a microreactor 106 used for a chemical reactor 100. Then, leakage of fluid from the operating fluid channel 103 is detected without contact with the operating fluid channel 103 by monitoring the monitoring channel 105.

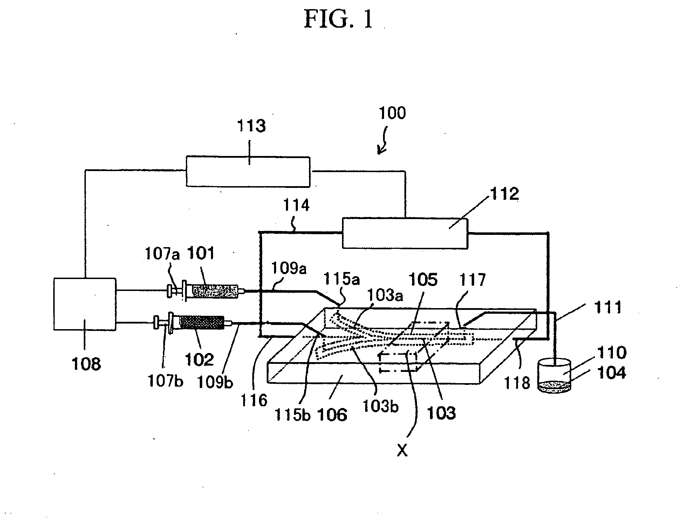

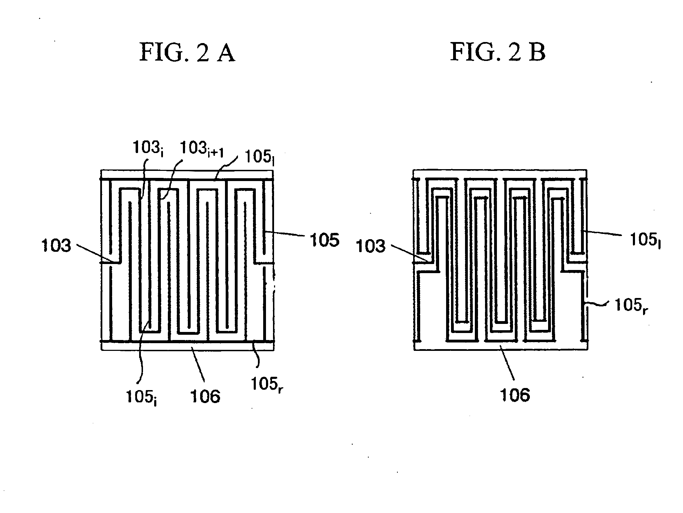

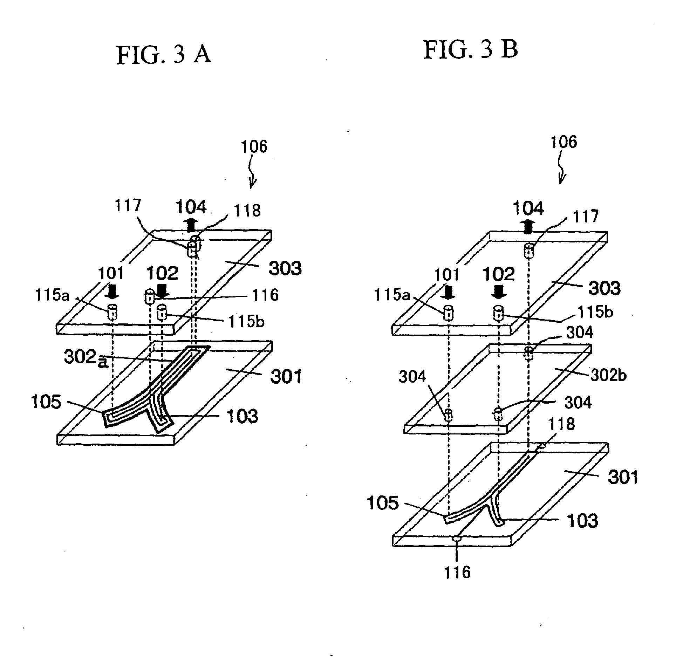

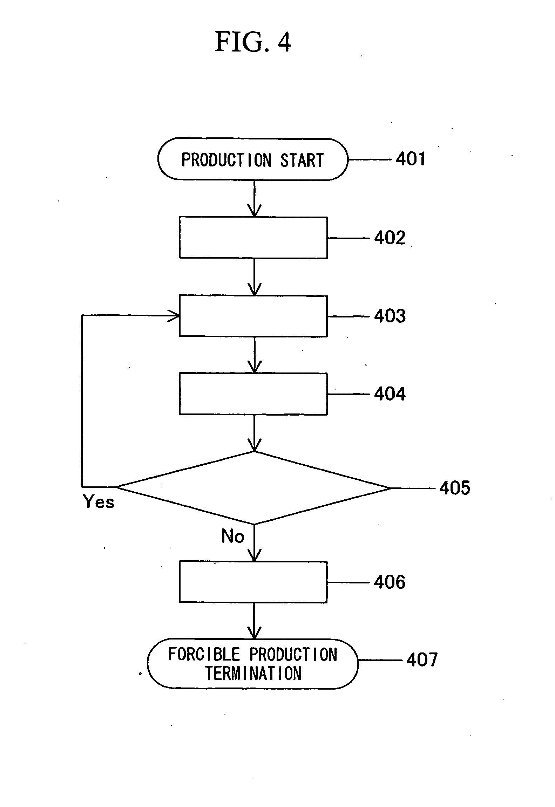

The specific leak detecting system will be explained hereafter with reference to the drawings. FIG. 1 is a schematic diagram of an embodiment of the chemical reactor 100 according to the present invention, FIG. 2 is a top view of the X part of the microreactor 106 of the chemical reactor 100, FIG. 3 is an exploded perspective view of the microreactor 106 of the chemical reactor 100 shown in FIG. 1, and FIG. 4 is a flow chart showing the control flow at the time of operating the chemical reactor 100.

The chemical reactor 100 has the plate-like microreactor. A minute channel 103 is formed in the microreactor 106 for a micro reaction between a first solution containing a first substance and a second solution containing a second substance. The minute channel 103 is branched into channels 103a, 103b for supplying first and second reaction product solutions 101, 102 to the minute channel 103. Supply ports 115a, 115b are formed each at the end part of the branched channels 103a, 103b, respectively. Supply port 115a, 115b is connected with one end of tubes 109a, 109b, respectively. The other end of the tube 109a is connected with a syringe 107a and the other end of the tube 109b is connected with a syringe 107b, respectively. The syringes 107a, 107b are connected with a pump 108, and the pump 108 is controlled by a pump controlling device 113.

For taking out a reaction product from the microreactor 106, an ejection port 117 is formed at the end part of the minute channel, and the ejection port 117 is connected with a tube 111. The end part of the tube 111 is guided to a solution reservoir 110 for storing a reaction product solution 104 in the solution reservoir 110.

Here, in the present invention, for detecting leakage of the first and second reaction production solutions 101, 102 and the reaction product solution 104 from the microreactor 106, the microreactor 106 is provided with the leak detecting channel 105 to be described later in the detail, formed in the vicinity of the minute channels 103, 103a, 103b. Then, a port 116 is formed on one end part of the leak detecting channel 105, and a port 118 is formed on the other end part, and the both end parts of a tube 114 with a pressure regulator 112 are connected with the ports 116, 118, respectively. The pressure regulator 112 is controlled by the pump controlling device 113.

FIG. 2 shows the details of the channels 103, 103a, 103b, 105 formed on the microreactor 106. Although the channels 103, 103a, 103b, 105 are shown schematically in FIG. 1, FIG. 2 shows the central part X of the channel 103 as an enlarged view. The other channels 103a, 103b have the same configuration.

FIG. 2 (a) shows the case of forming the channel 103 for the solution mixture of the first and second reaction product solutions 101, 102 in a meandering manner. A pair of leak detecting channels 105₁, 105ᵣ is disposed linearly outside the meandering width of the meandering channel 103. Then, a leak detecting channel 105ᵢ (i = 1,2, ...) is provided between two neighboring partial channels 103ᵢ, 103ᵢ₊₁ (i = 1, 2, ...) in the meandering channel 103. The leak detecting channel 105ᵢ (i = 1, 2, ...) communicates with one of the leak detecting channels 105₁ or 105ᵣ disposed outside the meandering channel 103. Moreover, the leak detecting channel 105ᵢ (i = 1, 2, ...) is disposed at a slight interval with respect to the meandering channel 103.

FIG. 2 (b) shows another example of the leak detecting channel 105. Also in the case of this figure, the channel 103 for a solution mixture of the first and second reaction product solutions 101, 102 mixed is formed in a meandering manner. Then, the leak detecting channel 105 is formed with the first, second leak detecting channels 105₁, 105ᵣ along the meandering channel 103. That is, the first leak detecting channel 105₁ is disposed always on the left side of the channel 103 with respect to the solution mixture flow direction, and the second leak detecting channel 105ᵣ is disposed always on the right side of the channel 103. Then, the first, second leak detecting channels 105₁, 105ᵣ are disposed in the vicinity of the channel 103.

Although the leak detecting channel 105 provided in the vicinity of the channel 103 is formed in the same plane as the channel 103 in this embodiment, they are not necessarily formed in the same plane, and the channel 103 and the leak detecting channel 105 can be formed in different planes as long as leakage of the solution from the channel 103 can be detected.

Moreover, although the leak detecting channel 105 consists of the left side leak detecting channel 105₁ and the right side leak detecting channel 105ᵣ, either one of the leak detecting channels 105₁, 105ᵣ may be eliminated as long as the flow condition inside of the channel 103 or the condition of the channel 103 can be detected.

Moreover, as long as the time taken for the leak detection can be tolerated, in FIG. 2 (a), the leak detecting channel 105ᵢ (i = 1, 2, ...) may be eliminated. Furthermore, in the case the common site of the risk of leak is known in advance, without the need of forming the leak detecting channel 105 along the entire route of the channel 103, the leak detecting channel 105 may be formed in for example only the portion where corrosion of the channel 103 can easily be generated due to mixture and reaction of the solutions. In either of the cases, the channel structure of the leak detecting channel 105 can be simplified by this embodiment.

The operation of the leak detecting system having the microreactor 106 of such a configuration will be explained hereafter. For detecting the condition of the channel 103 or the condition of the inside of the channel 103, the pressure in the inside of the leak detecting channel 105 is controlled to be a negative pressure by a predetermined amount using the pressure regulator 112. Thereafter, the pump controlling device 113 controls the pump 108 to send the first, second solutions 101, 102 in the syringe 107. The first, second solutions 101, 102 flow into the channel 103 via the tube 109 for connecting the syringe 107 and the microreactor 106.

The first, second solutions 101, 102 are mixed and reacted in the channel 103 so as to produce a reaction product solution 104. The produced reaction product solution 104 is sent to the solution reservoir 110 for collecting the product solution 104 via the tube 111 for connecting the solution reservoir 110 and the microreactor 106.

Here, the pressure in the leak detecting channel 105 is measured by the pressure regulator 112 using an unshown pressure measuring means while sending the first, second solutions 101, 102. Since the inside of the leak detecting channel 105 is maintained at the predetermined negative pressure, if fluid is leaked from the channel 103 to the leak detecting channel 105, the first, second solutions 101, 102, the reaction product solution 104, or the substances contained in the first, second solutions 101, 102 or the reaction product solution 104 are vaporized and the pressure increases in the leak detecting channel 105.

Therefore, it is found that the fluid is not leaked from the channel 103 if the pressure in the leak detecting channel 105 is unchanged. On the contrary, if the pressure in the leak detecting channel 105 is changed, it is found that the fluid is leaked from the channel 103. That is, by measuring the pressure in the leak detecting channel 105 using the pressure regulator 112, the condition in the channel 103, or the condition of the channel 103 can be detected.

Although a syringe pump is used as the pump 108 in the above-mentioned embodiment, as long as the reaction product solution in the syringe 107 can be guided to the microreactor 106, manually pressing the syringe can be adopted. Although the first, second solutions 101, 102 are guided to the microreactor 106 using the syringe 107 and the pump 108, as long as the first, second solutions 101, 102 can be guided to the microreactor 106, a plunger pump, a diaphragm pump, and a screw pump may also be used. Moreover, the hydraulic head difference may also be utilized.

For the tubes 109, 111, those having no adverse effect to the reaction, such as stainless, silicon, glass, hastelloy, silicon resin, or the like are used. By using glass lining, or metal with surface coating of Ni, Au, Ag, or the like, or surface-oxidized silicon, the corrosion resistance is improved.

At the time of starting the condition detecting system shown in FIG. 1 or changing the experiment conditions, the microreactor 106 can be washed for changing the first, second solutions 101, 102. In this case, it is preferable to add a collecting mechanism for collecting the solutions as waste solutions from the inside of the syringe 107 and the tubes 109, 111 and the inside of the microreactor 106. In this case, the condition detecting system can be provided with further high function.

For controlling the channel 103 in a predetermined temperature, it is preferable to use for example a temperature controlled bath capable of storing the entire microreactor 106. Or the microreactor 106 may be sandwiched between temperature controlled plates by Peltier devices or with a cooling or heating fluid. Or a temperature controlling channel may be formed in the microreactor 106 for supplying a temperature controlled fluid.

Although two kinds of the solutions, the first, second solutions 101, 102 are mixed in the channel formed in the microreactor 106 in the above-mentioned embodiment, three or more kinds of solutions may be mixed. Moreover, the channel can be provided in a multilayer structure. Specifically, in addition to the mechanism for mixing and reacting the first, second solutions 101, 102 so as to discharge the product solution 104, for example, a mechanism for obtaining the first solution 101 and the second solution 102 via the channel 103 by guiding a plurality of solutions, a mechanism for guiding the product solution 104 and several solutions into the microreactor 106 to mix those solutions in the channel 103 so as to discharge another reaction product solution, a mechanism for refining a substance by extraction or distillation from the product solution 104, or the like may be provided in the microreactor 106.

At the time of forming the channel in the microreactor 106, using a pair of substrates, one flat substrate is superimposed on the other substrates with channels by the micro processing technology to be joined together. Or one substrate is superimposed on the other substrate with channels by the micro processing technology to be screwed together. Since the channel is formed in such a manner, the substrates can be disassembled easily after using the microreactor 106.

For the microreactor 106, stainless, silicon, gold, glass, hastelloy, or silicon resin, which does not pose an adverse effect to the reaction, are used. Or by using glass lining, metal coated with Ni, Au, Ag, or the like, or surface-oxidized silicon, the corrosion resistance is improved.

The width of the channel 103 formed in the microreactor 106 is a width smaller than the diameter of clusters generated as a result of agitation in an experiment by the batch method. Specifically, it is 1 mm or less. The more minute the channel 103 is, the better the mixing efficiency can be improved. However, when the channel 103 is too minute, the flow rate, that is, the production amount is reduced so that it is not practical. Moreover, since the risk of blocking the channel 103 by introduction of the impurities or crystallization by the reaction is increased, the width of the channel 103 is determined according to the kind of the reaction or the purpose of use.

Although the shape of the channel 103 for mixing the first, second solutions 101, 102 is provided in a Y shape in the above-mentioned embodiment, as long as it is a channel shape capable of mixing the first, second solutions 101, 102, it may be a T shape. Or a nozzle for ejecting the second solution 102 may be provided on the wall surface of the channel for having the first solution 101 flowing, or a nozzle for ejecting the second solution 102 may be provided on the bottom surface of the channel for having the first solution 101 flowing. Or, the first, second solutions 101, 102 may be switched.

Although the shape of the channel after mixing the first, second solutions 101, 102 is provided linearly in the above-mentioned embodiment, the channel may be provided in a meandering manner or spirally. The shape can be selected in consideration of the speed of producing the reaction product solution from the mixed first, second solutions 101, 102, or the like.

Although the channel 103 and the tubes 109, 111 are connected on the upper surface side of the microreactor 106 in the above-mentioned embodiment, they may be connected on the lower surface side or the side surface of the microreactor 106. Although the leak detecting channel 105 and the pressure regulator 112 are connected on the side surface of the microreactor 106, they may be connected on the upper surface side or the lower surface side of the microreactor 106. The connecting position may be selected selectively according to the specific configuration or the chemical reactor 100.

FIG. 3 is an exploded perspective view of the microreactor 106 provided in the disassemble way. The disassemble type microreactor 106 shown in FIG. 3 (a) is provided with two first, second substrates 301, 303 having the substantially same external shape superimposed. In the first substrate 301, the channel 103 and the leak detecting channel 105 are formed by the micro processing technology, or the like. A polytetrafluoroethylene (PTFE) resin seal 302a is embedded as a packing in the circumference of the channels 103, 105 on the first substrate 301.

In the second substrate 303, through-holes are formed according to the shape of the channel 103 formed in the first substrate 301, and supply ports 115a, 115b are fitted in the through-holes, for connecting the tube 109 for guiding the first, second solutions 101, 102 to the channel 103. Moreover, the ejection port 117 to be connected with the tube 111 for discharging the reaction product solution 104 produced in the channel 103 to the outside of the microreactor 106 is fitted in the through-hole on the downstream side of the channel 103. In the second substrate 303, furthermore, ports 116, 118 for connecting the leak detecting channel 105 and the pressure regulator 112 are formed at a position corresponding to the leak detecting channel 105 of the first substrate 303.

FIG. 3 (b) shows an example of the microreactor 106 using a third substrate 302b as an intermediate substrate instead of the seal 302a for surrounding the channel 103 and the leak detecting channel 105. The microreactor 106 is provided with the intermediate substrate 302b laminated between the two first, second substrates 301, 303 having the substantially same external shape. In the first substrate 301, the channel 103 and the leak detecting channel 105 are formed by the micro processing technology, or the like. The leak detecting channel 105 elongates to the short side of the first substrate 301, and the ports 116, 118 for connecting the leak detecting channel 105 and the pressure regulator 112 are formed on the end part thereof.

In the second substrate 303, through-holes are formed, with supply ports 115a, 115b and the ejection port 117 for connecting a tube 109 for guiding the first, second solutions 101, 102 to the microreactor 106 and a tube 111 for discharging the reaction product solution 104. The sheet 302b as the intermediate substrate is a sheet made of soft material, such as polytetrafluoroethylene (PTFE) resin. In the sheet 302b, the through-holes 304a to 304c are formed at the same positions as the through-holes formed in the second substrate 303.

In the microreactor 106 shown in the above-mentioned embodiment, the condition of the channel 103 or the internal condition of the channel 103 is detected from the pressure change in the leak detecting channel 105. Therefore, the channel 103 and the leak detecting channel 105 are maintained airtightly. In this embodiment, for enduring repeated use for enabling disassembly of the microreactor 106, hard material such as stainless, silicon, gold, glass, and hastelloy is used for the first, second substrates 301, 303 of the microreactor 106. In the case such hard material is used for the substrates 301, 303, the contact surface pressure and the evenness of the substrate are determined by the substrate surface roughness. In the case the substrate surface is rough, it is difficult to maintain a sufficient airtight property so that the first, second solutions 101, 102 and the reaction product solution 104 are leaked form the channel 103 to the leak detecting channel 105.

For improving the airtight property, in the embodiment shown in FIG. 3 (a), a seal 302a made of soft material such as polytetrafluoroethylene (PTFE) resin is fitted in the substrate 301 with the channels 103, 105 produced by the micro processing technology. The seal 302a may be fitted in the bottom surface side of the second substrate 303. Moreover, in the embodiment shown in FIG. 3 (b), a sheet 302b of the size of the first, second substrates is clamped between the first, second substrates 301, 303 for covering the channel 103 and the leak detecting channel 105.

FIG. 4 is a flow chart of the control algorithm of the leak detecting system shown in the above-mentioned embodiments. At the production start (step 401), the pressure regulator 112 controls the pressure in the inside of the leak detecting channel 105 to be equal to a predetermined negative pressure in the chemical reactor 100 shown in FIG. 1 (step 402). Thereafter, the pump controlling device 113 drives the pump 108 for sending the first, second solutions 101, 102 into the channel 103 (step 403).

Whether or not the first, second solutions 101, 102 are continued to be sent to the channel 103 is judged by measuring the pressure in the leak detecting channel 105 by the pressure regulator 112 (step 404) and referring to the pressure conditions in the leak detecting channel 105 stored in an unshown memory means (step 405). In comparison with the pressure conditions in the leak detecting channel 105, if the pressure in the leak detecting channel 105 is not judged to be changed, since the solutions are not leaked from the channel 103, the first, second solutions 101, 102 are continued to be sent (step 403). The steps 403 to 405 are repeated until the first, second solutions 101, 102 are sent to a predetermined amount.

Here, the pressure conditions in the leak detecting channel 105 are determined strictly, both by the amount of the first, second solutions 101, 102 or the reaction product solution 104 themselves, or at least either of highly volatile solute and solvent contained in the first, second solutions 101, 102 and the reaction production solution 104 leaked to the leak detecting channel 105, and by the vapor pressure of the substance at the setting pressure in the leak detecting channel 105. It is difficult to predict the amount of a vaporized substance leaked to the leak detecting channel 105. However, since the leak detecting channel 105 is maintained at a predetermined negative pressure, the substances in the solutions 101, 102, 104 flowing in the channel 103 are vaporized immediately so that the pressure in the leak detecting channel 105 is increased drastically. Therefore, the pressure conditions in the leak detecting channel 105 depend on the performance of the pressure regulator 112.

If the pressure regulator 112 judges that the pressure in the leak detecting channel 105 is changed, since fluid is leaked form the channel 103, the leak information is fed back to the pump controlling device 113 to stop the pump 108 (step 406). By finishing the first, second solutions 101, 102 sending operation, the production is terminated forcibly (step 407). At the forcibly production termination, the first, second solutions 101, 102 and the reaction product solution 104 remain in the channel 103 and the leak detecting channel 105. However, even in that case, a solution of an unknown component cannot be introduced into the reaction production solution 104. Moreover, since the pressure change is generated instantaneously by the leakage of the solutions 101, 102, 104, the amount of the solutions 101, 102, 104 leaked to the outside of the microreactor 106 can be restrained at the minimum level.

For preventing introduction of a solution of an unknown component into the reaction production solution 104, in addition to the solution reservoir 110 for storing the reaction product solution 104, a waste solution reservoir for storing a waste solution is provided. If the pressure in the leak detecting channel 105 is judged to be changed, the pressure change is fed back to the pump controlling device 113. At the same time, the destination for storing the reaction product solution 104 is switched from the solution reservoir 110 to the waste solution reservoir, and all amount of the first, second solutions 101, 102 is sent to the waste solution reservoir. Although at least any of the solutions 101, 102, 104 remains in both the channel 103 and the leak detecting channel 105, there is no risk of introduction of a solution including an unknown component into the reaction product solution 104.

However, if the channel 103 is corroded, or the channel 103 is further corroded at the time of completing the residual solutions 101, 102 sending operation, the solutions 101, 102, 104 may be leaked to the outside of the microreactor 106.

Although the inside of the leak detecting channel 105 is maintained at a predetermined negative pressure using the pressure regulator 112 in the above-mentioned embodiment, it may be a predetermined positive pressure. For example, with preliminarily filling the inside of the leak detecting channel 105 with an inert gas hardly reactive with the solutions 101, 102, 104, such as helium and argon, the inside of the leak detecting channel 105 is maintained at a predetermined pressure using the pressure regulator 112. Thereby, the pressure change by leakage of fluid from the channel 103 may be detected. On the other hand, with preliminarily sealing a substance to be reacted instantaneously with the solutions 101, 102, 104 in the leak detecting channel 105, it is maintained at a predetermined pressure using the pressure regulator 112. In this case, by measuring the pressure change derived from the reaction with the impurities, leakage of fluid from the channel 103 can be detected.

However, in the case the microreactor 106 is provided by superimposing and screwing the first substrate having a channel produced by the micro processing technology, or the like, and the second substrate, if the inside of the leak detecting channel 105 is in a positive pressure, a pressuring force is applied so as to increase the gap of the microreactor 106. Therefore, it is more preferable to maintain the pressure in the leak detecting channel 105 at a negative pressure.

In the case the solutions 101, 102, 104 are leaked from the channel 103 to some extent, leakage can be judged also by measuring the pressure change in the channel 103 directly by the pump controlling device 113. In this case, it is difficult to grasp minute leakage. Therefore, by providing the leak detecting channel 105, and maintaining the pressure in the channel 105 to a predetermined negative pressure by the pressure regulator 112, leakage of the solution from the channel 103 can be detected further precisely.

Although a leak of the solution is guided to the leak detecting channel 105 in the above-mentioned embodiment, at the time, if the solution contains highly volatile solute and solvent or the solution is easily vaporized, leakage of the solution can be detected by using a gas detector instead of the pressure regulator 112.

In the above-mentioned embodiment, leakage of the solution from the channel 103 to the leak detecting channel 105 may be detected using the spatial thermal conductivity measuring device instead of the pressure regulator 112. In general, since the thermal conductivity is higher in the order of gas, liquid, solid and metal, in the case that liquid, solid or metal is contained in a solution, leakage of the solution from the channel 103 can be monitored precisely by the thermal conductivity change. Leakage of the solution from the channel 103 can also be detected by sealing a substance easily reactive with the solutions 101, 102, 104 and the components in the solutions 101, 102, 104 in the leak detecting channel 105 in advance, and then measuring the spatial thermal conductivity change by the reaction using the spatial thermal conductivity measuring device.

In the above-mentioned embodiment, leakage of the solution from the channel 103 to the leak detecting channel 105 can be detected using an electric conductivity measuring device instead of the pressure regulator 112. Since the electric conductivity is larger for metal and ion, in the case the solution contains metal or ion, leakage of the solution can be monitored precisely from the electric conductivity change. If the substance to be produced by the reaction is metal or ion, leakage of the reaction product from the channel 103 can be detected precisely from the electric conductivity change.

In the case the first, second solutions 101, 102 or the reaction product solution 104 are colored, the microreactor 106 is produced with a colorless and transparent material or a material almost colorless and transparent, which is corrosion resistant with respect to the colored solution. In this case, leakage of the solution from the channel 103 to the leak detecting channel 105 can be judged easily from the color change of the leak detecting channel 105 without the need of using the pressure regulator, the gas detector, the spatial thermal conductivity measuring device, the electric conductivity measuring device, or the like. Even if the solutions 101, 102, 104 themselves are not colored, in the case they have a nature to be colored by the reaction with liquid sealed in the leak detecting channel 105, leakage of the solution from the channel 103 can be detected easily by the color change by the reaction with the liquid in the leak detecting channel 105.

Although the chemical reactor has the microreactor 106 by only one set in the above-mentioned embodiment, naturally, it may be provided by two or more sets. Moreover, the reactor used in an ordinary batch method may be newly added in addition to microreactors. Some substance refineries may be included such as extraction and distillation apparatus. These refineries may be provided corresponding to each microreactor, or only specific microreactors. However, two kinds of microreactors may be provided for specific microreactors. These substance refineries do not necessarily have micro channels and may be the ones used in a batch method.

Although the first solution 101 and the second solution 102 are provided as the starting solutions in the above-mentioned embodiment, at least either of the first solution 101 and the second solution 102 may be a reaction product solution produced by another microreactor. Moreover, at least either of the first, second solutions 101, 102 may be a target product solution of another microreactor.

## Claims

1. A substance manufacturing apparatus having a first substrate having a channel (103) for mixing and allowing passage of first and second solutions, and a second substrate mounted on the first substrate, wherein a leak detecting channel (105) for detecting leakage of the first, second solutions or a reaction product solution from the channel (103) is formed in the vicinity of the channel (103) formed in the first substrate,
**characterised in that** the channel (103) is formed in a meandering form and the leak detecting channel (105) is formed along the route of the channel (103) and comprises a plurality of channels (105r, 1051, 105i) with bifurcations elongating between the meanders of the channel (103).

2. A substance manufacturing apparatus having a first substrate having a channel (103) for mixing and allowing passage of first and second solutions, and a second substrate mounted on the first substrate, wherein a leak detecting channel (105) for detecting leakage of the first, second solutions or a reaction product solution from the channel (103) is formed in the vicinity of the channel (103) formed in the first substrate,
**characterised in that** the channel (103) is formed in a meandering form, and the leak detecting channel (105) is formed along the route of the channel (103) and comprises two meandering channels (105r, 1051) along the meandering channel (103).

3. The substance manufacturing apparatus according to claim 1 or 2, wherein a pressure detecting means (112) for detecting the pressure of the leak detecting channel (105), and a pressure regulator (112) for judging leakage of the solution by comparing the pressure with a predetermined value are provided, and the pressure regulator maintains the leak detecting channel at a negative pressure.

4. The substance manufacturing apparatus according to claim 1 or 2, wherein fluid is sealed in the leak detecting channel (105), and a detecting means for detecting components of only the gases of the fluid in the leak detecting channel, the spatial thermal conductivity and/or the electric conductivity is provided.

5. The substance manufacturing apparatus according to claim 4, wherein a means (112) for maintaining the leak detecting channel at a negative pressure is provided.

6. A chemical reactor comprising a pump (101, 102, 108) for delivering first and second solutions, a pump control device (113) for controlling the amount of the first and second solutions to be delivered by the pump, and a microreactor (106) to have supply of the first and second solutions and having a first substrate with a channel (103) for mixing and reacting the first and second solutions, a second substrate to be bonded with the first substrate, a leak detecting channel (105) with gas sealed at a negative pressure provided in the vicinity and along the route of the channel (103) formed in the first substrate, a pressure detecting means for detecting the pressure of the leak detecting channel, and a pressure regulator (112) for judging leakage of the first and second solutions or a reaction product solution by comparing the pressure detected by the pressure detecting means with a predetermined value.

## Patentansprüche

1. Herstellungsvorrichtung für eine Substanz, mit einem ersten Substrat, das einen Kanal (103) zum Mischen und Durchleiten einer ersten und einer zweiten Lösung aufweist, und einem zweiten Substrat, das auf dem ersten Substrat befestigt ist, wobei in der Gegend des im ersten Substrat ausgebildeten Kanals (103) ein Leck-Erkennungskanal (105) zum Erkennen eines Ausleckens der ersten oder zweiten Lösung oder einer Reaktionsproduktlösung aus dem Kanal (103) ausgebildet ist,
**dadurch gekennzeichnet, dass** der Kanal (103) mäanderförmig ausgebildet ist und der Leck-Erkennungskanal (105) entlang dem Weg des Kanals (103) ausgebildet ist und mehrere Kanäle (105r, 1051, 105i) mit Gabelungen aufweist, die sich zwischen die Mäander des Kanals (103) erstrecken.

2. Herstellungsvorrichtung für eine Substanz, mit einem ersten Substrat, das einen Kanal (103) zum Mischen und Durchleiten einer ersten und einer zweiten Lösung aufweist, und einem zweiten Substrat, das auf dem ersten Substrat befestigt ist, wobei in der Gegend des im ersten Substrat ausgebildeten Kanals (103) ein Leck-Erkennungskanal (105) zum Erkennen eines Ausleckens der ersten oder zweiten Lösung oder einer Reaktionsproduktlösung aus dem Kanal (103) ausgebildet ist,
**dadurch gekennzeichnet, dass** der Kanal (103) mäanderförmig ausgebildet ist und der Leck-Erkennungkanal (105) entlang dem Weg des Kanals (103) ausgebildet ist und entlang dem mäandernden Kanal (103) zwei mäandernde Kanäle (105r, 1051) aufweist.

3. Vorrichtung nach Anspruch 1 oder 2, wobei eine Druck-Erkennungseinrichtung (112) zum Erkennen des Drucks des Leck-Erkennungskanals (105) und ein Druckregulator (112) zum Beurteilen eines Ausleckens der Lösung durch Vergleich des Drucks mit einem vorbestimmten Wert vorgesehen sind und der Druckregulator den Leck-Erkennungskanal bei negativem Druck hält.

4. Vorrichtung nach Anspruch 1 oder 2, wobei im Leck-Erkennungskanal (105) ein Fluid eingeschlossen ist und eine Erkennungseinrichtung vorgesehen ist, um Komponenten lediglich der Gase des Fluids im Leck-Erkennungskanal, die räumliche Wärmeleitfähigkeit und/oder die elektrische Leitfähigkeit zu erkennen.

5. Vorrichtung nach Anspruch 4, wobei eine Einrichtung (112) vorgesehen ist, um den Leck-Erkennungskanal bei negativem Druck zu halten.

6. Chemischer Reaktor mit einer Pumpe (101, 102, 108) zur Abgabe einer ersten und einer zweiten Lösung, einer Pumpensteuervorrichtung (113) zum Steuern der Menge der von der Pumpe abzugebenden ersten und zweiten Lösung und einem Mikroreaktor (106), dem die erste und die zweite Lösung zugeführt werden kann und der ein erstes Substrat mit einem Kanal (103) zum Mischen und Reagierenlassen der ersten und der zweiten Lösung, ein mit dem ersten Substrat zusammenzufügendes zweites Substrat, einen in der Gegend und entlang dem Weg des im ersten Substrat ausgebildeten Kanals (103) vorgesehenen Leck-Erkennungskanal (105) mit einem bei negativem Druck eingeschlossenen Gas, eine Druck-Erkennungseinrichtung zum Erkennen des Drucks des Leck-Erkennungskanals und einen Druckregulator (112) zum Beurteilen eines Ausleckens der ersten und zweiten Lösung oder einer Reaktionsproduktlösung durch Vergleich des von der Druck-Erkennungseinrichtung erkannten Drucks mit einem vorbestimmten Wert aufweist.

## Revendications

1. de fabrication de substance ayant un premier substrat ayant un canal (103) pour mélanger et permettre le passage de première et seconde solutions, et un second substrat monté sur le premier substrat, dans lequel un canal de détection de fuite (105) pour détecter une fuite des première, seconde solutions ou d'une solution de produit réactionnel à partir du canal (103) est formé au voisinage du canal (103) formé dans le premier substrat,
**caractérisé en ce que** le canal (103) est formé en forme de méandres et le canal de détection de fuite (105) est formé le long du trajet du canal (103) et comporte une pluralité de canaux (105r, 1051, 105i), des bifurcations s'étendant entre les méandres du canal (103).

2. Dispositif de fabrication de substance ayant un premier substrat ayant un canal (103) pour mélanger et permettre le passage de première et seconde solutions, et un second substrat monté sur le premier substrat, dans lequel un canal de détection de fuite (105) pour détecter une fuite des première, seconde solutions ou d'une solution de produit réactionnel à partir du canal (103) est formé au voisinage du canal (103) formé dans le premier substrat,
**caractérisé en ce que** le canal (103) est formé en forme de méandres, et le canal de détection de fuite (105) est formé le long du trajet du canal (103) et comporte deux canaux en méandres (105r, 1051) le long du canal en méandres (103).

3. Dispositif de fabrication de substance selon la revendication 1 ou 2, dans lequel des moyens de détection de pression (112) pour détecter la pression du canal de détection de fuite (105), et un régulateur de pression (112) pour déterminer une fuite de la solution en comparant la pression à une valeur prédéterminée, sont agencés, et le régulateur de pression maintient le canal de détection de fuite en dépression.

4. Dispositif de fabrication de substance selon la revendication 1 ou 2, dans lequel du fluide est scellé dans le canal de détection de fuite (105), et des moyens de détection sont prévus pour détecter des composants uniquement des gaz du fluide dans le canal de détection de fuite, la conductivité thermique spatiale et/ou la conductivité électrique, sont agencés.

5. Dispositif de fabrication de substance selon la revendication 4, dans lequel des moyens (112) sont prévus pour maintenir le canal de détection de fuite en dépression.

6. Réacteur chimique comportant une pompe (101, 102, 108) pour délivrer des première et seconde solutions, un dispositif de commande de pompe (113) pour commander la quantité des première et seconde solutions devant être délivrées par la pompe, et un microréacteur (106) pour assurer une fourniture des première et seconde solutions et ayant un premier substrat avec un canal (103) pour mélanger et faire réagir les première et seconde solutions, un second substrat devant être collé avec le premier substrat, un canal de détection de fuite (105) avec du gaz enfermé en dépression agencé au voisinage et le long du trajet du canal (103) formé dans le premier substrat, des moyens de détection de pression pour détecter la pression du canal de détection de fuite, et un régulateur de pression (112) pour déterminer une fuite des première et seconde solutions ou d'une solution de produit réactionnel en comparant la pression détectée par les moyens de détection de pression à une valeur prédéterminée.
